# EUROPÄISCHE PATENTANMELDUNG

(11) **EP 0 814 448 A2**
(43) Veröffentlichungstag der Anmeldung: **29.12.1997**
(21) Anmeldenummer: 97109349.7
(22) Anmeldetag: 05.06.1997
(51) Int. Cl.: G08G 1/0968

(54) **Verfahren zur dynamischen Routenempfehlung**

(30) Priorität: 13.06.1996 DE 19623666
(71) Anmelder: SIEMENS AKTIENGESELLSCHAFT, 80333 München (DE)
(72) Erfinder: Oberstein, Karla, 81669 München (DE)

(57) **Zusammenfassung**

Mittels eines Mobilfunkdienstes und einer Verkehrsleit- und Informationszentrale sowie einer Navigations- und einer Mobilfunkeinrichtung im Fahrzeug wird durch den Benutzer über eine Mobilfunk-Schnittstelle über ein Mobilfunknetz und einer Verkehrsleit- und Informationszentrale im Dialog eine aktuelle Route angefordert. Die Zieleingabe erfolgt an jedem beliebigen Ort unabhängig von einer Mobilfunkverbindung zur Zentrale. Die Navigationseinrichtung berechnet zunächst rein autark aufgrund der gespeicherten Borddaten die Route. Mit einer Anfrage an die Zentrale wird nicht die aktuelle, sondern die voraussichtliche Position zum Zeitpunkt der erwarteten Antwort an das Fahrzeug übertragen, und die Daten der Routenempfehlung werden in Form von einer Folge von Streckenabschnitten an das Fahrzeug gegeben.

## Beschreibung

Die Erfindung bezieht sich auf ein Verfahren zur dynamischen Routenempfehlung im innerstädtischen Bereich für ein Fahrzeug mit einem autarken Navigationssystem mittels eines Mobilfunkdienstes und einer Verkehrsleit- und Informationszentrale, wobei das Fahrzeug einen Navigations- und eine Mobilfunkeinrichtung aufweist.

Unter einer 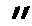 dynamischen" Route versteht man eine zeitgünstige Route, die aktuell existierende Baustellen und Verkehrsbehinderungen berücksichtigt, ebenso die aktuelle Verkehrslage. Das hier beschriebene Verfahren soll für den innerstädtischen Bereich anwendbar sein.

Es sind bisher eine Reihe von Fahrzeug-Navigationssystemen bekannt, welche im wesentlichen autarke Navigationssysteme sind. Das heißt, sie haben einen Datenspeicher, eine digitalisierte Straßennetzkarte an Bord. Auf einem solchen Massenspeicher sind alle geografischen Daten gespeichert, aufgrund derer einem Autofahrer der Weg von einer aktuellen Position zu einem von ihm gewünschten Ziel berechnet und angezeigt werden kann. Zu deren Dynamisierung sind bereits mehrere Vorschläge gemacht worden. Ein bekanntes Leit- und Informationssystem sieht als Infrastruktur ein Bakensystem vor, über das in Broadcast-Mode laufend alle dynamischen Routeninformationen übertragen werden. Ein derartiges Navigationssystem ist in der deutschen Patentschrift 29 23 634 beschrieben. Der Nachteil dieses Systems besteht jedoch darin, daß sehr hohe Einführungskosten wegen der erforderlichen Infrastruktur nötig sind.

Zur Dynamisierung von Routenempfehlungen wurde bereits vorgeschlagen, das Radiodatasystem, RDS/TMC, zu verwenden. Der Traffic-Message-Channel (TMC) besteht jedoch nur aus einem sehr schmalen Datenkanal, so daß in absehbarer Zeit darüber nur Verkehrsereignisse auf der Autobahn übertragen werden, für innerstädtische Informationen ist die Kanal-Kapazität zu klein.

Ein anderer Vorschlag zur Dynamisierung der Routenempfehlungen basiert auf dem Mobilfunknetz im Rahmen eines Broadcast-Modes. Dabei werden alle aktuellen Änderungen gegenüber den auf einem Datenspeicher im Fahrzeug abgelegten Informationen über das Mobilfunknetz übertragen, z.B. die geänderten Reisezeiten oder alle zur Zeit gültigen Baustellen. Das Fahrzeuggerät kann sich dann selbst die kürzeste Route berechnen. Bei diesem Verfahren ist jedoch eine sehr hohe Rechenkapazität im Fahrzeuggerät notwendig. Außerdem besteht ein Synchronisationsproblem, wenn eine Zentrale, die die dynamischen Daten verwaltet und die Fahrzeuggeräte in den einzelnen Fahrzeugen nicht auf dem gleichen Ausgabestand der digitalen Karte aufsetzen.

Darüber hinaus wurde auch ein Dialog-System über ein Mobilfunknetz vorgeschlagen. Der Fahrer hat keine autarke Datenbasis an Bord. Er läßt sich statt dessen im Bedarfsfall von einer Zentrale die aktuell beste Route übertragen.

Aus DE-OS-195 19 066 ist ein Verfahren bekannt, bei dem ein Fahrzeug eine Start- und Zielposition über ein Mobilfunknetz an eine Verkehrsleitzentrale überträgt, diese die aktuell günstigste Streckenführung berechnet und an das Fahrzeug über das Mobilfunknetz übermittelt. Mittels vom Fahrzeug mitgeführter Navigationseinrichtungen in Form einer digitalisierten Straßenkarte, eines GPS-Empfängers (Global Positioning System) und eines Rechners erfolgt die weitere Zielführung im Fahrzeug, wobei gegebenfalls aufgrund einer neuen Verkehrssituation geänderte Daten zur Streckenführung von der Verkehrsleitzentrale über das Mobilfunknetz an das Fahrzeug übermittelt werden.

Diese beiden zuletzt beschriebenen Systeme haben allerdings im innerstädtischen Bereich Probleme, dergestalt, daß beim Anfahren oder beim Verlassen der empfohlenen Route und anschließendem Wiedereinphasen Zeitverschiebungen entstehen. Denn zwischen Anfrage und Antwort von einer Zentrale kann ohne weiteres eine gewisse Zeit vergehen, während der das Fahrzeug sich weiterbewegt. Damit stimmt die Position zum Zeitpunkt der Abfrage nicht mehr mit der Position zum Zeitpunkt der Antwort überein. In einem innerstädtischen Netz, das sehr dichte Straßenzüge aufweist, kann sich dann das Fahrzeug auf einer von mehreren abgehenden Straße befinden. Um die zu einem Ziel gehörigen Koordinaten zu bekommen, ist Kontakt mit einer Zentrale notwendig. Der ist aber nicht unbedingt an jeder Position gegeben. Der Fahrer muß dann so lange abwarten, bis ein derartiger Kontakt hergestellt ist.

Aufgabe der Erfindung ist es daher, ein autarkes Navigationssystem unter Zuhilfenahme eines Mobilfunknetzes und einer Verkehrsleit- und Informationszentrale so auszubilden, daß eine dynamische Leitweglenkung von der Fahrzeugposition bis zu einem eingegebenen Ziel möglich ist. Auch beim absichtlichen oder unabsichtlichen Verlassen der empfohlenen Route soll der Fahrer des Fahrzeugs möglichst automatisch wieder auf eine dynamisch günstige Route geführt werden.

Diese Aufgabe wird erfindungsgemäß mit den Merkmalen des Anspruchs 1 gelöst.

Bei dem erfindungsgemäßen Verfahren wird durch den Benutzer mit der Navigationseinrichtung über eine Mobilfunk-Schnittstelle über ein Mobilfunknetz, zum Beispiel GSM (Groupe Spécial Mobile) und einem Verkehrsleit- und Informationsrechner im Dialog eine aktuelle Route angefordert. Dabei erfolgt die Zieleingabe an jedem beliebigen Ort unabhängig von einer Mobilfunkverbindung. Daraufhin berechnet die autarke Navigationseinrichtung aufgrund der gespeicherten Borddaten die Route zum eingegebenen Ziel. Mit einer Anfrage an die Zentrale wird nicht die aktuelle, sondern die voraussichtliche Position zum Zeitpunkt der erwarteten Antwort an das Fahrzeug übertragen. Die Daten der Routenempfehlung werden in Form von einer Folge von Streckenabschnitten an das Fahrzeug gesendet.

In einer weiteren Ausgestaltung des erfindungsgemäßen Verfahrens wird mit der Routenanfrage an die Zentrale die Versionsnummer der im Massenspeicher der Bordeinrichtung gespeicherten Daten übertragen. Ferner wird die gesamte Folge von Streckenabschnitten bis zum erwarteten Eintreffen der Antwort mit übertragen. In der Zentrale wird die aktuelle Datenversion mit der empfangenen Version verglichen. Im Falle einer älteren Versionsnummer überträgt die Zentrale zum Fahrzeug bestimmte fehlende Straßenabschnittsdaten und ein Hinweissignal, welches dem Fahrer des Fahrzeugs das Fehlen der aktuellen Version anzeigt.

Das erfindungsgemäße Verfahren benützt ein autarkes Navigationssystem in Verbindung mit einer GSM-Schnittstelle, über die im Dialog eine aktuelle Route angefordert werden kann. Dieses erfindungsgemäße Verfahren hat sowohl den Vorteil eines GSM-Dialog-geschützten Verfahrens, d.h. keine Anfangsinvestitionskosten bei der Infrastruktur, keine Synchronisationsprobleme mit unterschiedlichen Datenbasen in der Zentrale und in den Fahrzeugen als auch den Vorteil eines autarken Navigationsverfahrens, nämlich von einer aktuellen Verbindung zu einer Zentrale unabhängig zu sein. Außerdem gestaltet sich auch der Beginn einer Fahrt und das eventuelle Verlassen einer vorgegebenen Route und anschließenden Wiedereinphasung einfacher.

Die Zieleingabe kann bei diesem Verfahren an jedem beliebigen Ort erfolgen, auch dann, wenn keine Verbindung zu einer Zentrale über das Mobilfunknetz besteht, z.B. in einer Tiefgarage. Bei dem erfindungsgemäßen Verfahren wird nur auf lokale Komponenten im Fahrzeug zugegriffen. Anschließend kann das autarke Navigationssystem die Route zu dem gewünschten Ziel berechnen, rein autark aufgrund der an Bord gespeicherten Daten. Mit einer Anfrage an die Zentrale über das Mobilfunknetz wird dann nicht die aktuelle Position übertragen, sondern die voraussichtliche Position, die in üblicher Weise in Form der Nummer eines Streckenabschnittes oder auf eine andere Codierungsart, zum Zeitpunkt der erwarteten Anwort. Die Zentrale errechnet nur die Route von genau einem Anfangspunkt zu dem Ziel und nicht mehr von mehreren möglichen Anfangspunkten aus. Dasselbe wiederholt sich, sobald ein Fahrer seine empfohlene Route absichtlich oder versehentlich verläßt und wieder eingephast werden will. Da das autarke Navigationsgerät nur statische Daten zur Verfügung hat, könnte aufgrund von aktuellen Gegebenheiten eine Strecke aktuell gesperrt sein, beispielsweise aufgrund einer Baustelle, wobei sich dies Strecke zwischen der Anfangsposition des Fahrzeugs und der Position für die zu erwartende Antwort befinden kann. Bei dieser ungünstigen Situation kann es dann vorkommen, daß der Fahrer möglicherweise nicht auf den vom autarken Navigationsgerät geplanten Streckenabschnitt kommt. Eine weitere Möglichkeit, die zu Problemen führen kann, kann dadurch gegeben sein, daß das autarke Navigationsgerät einen anderen Versionsstand der Daten als die Zentrale aufweist. Das heißt, das Fahrzeug hat noch einen älteren Versionsstand. Dabei kann es vorkommen, daß ein Straßenstück nicht mehr als befahrbar vorhanden ist.

Um dies zu vermeiden, wird die Versionsnummer der Daten im Massenspeicher des Fahrzeugs an die Zentrale mitübertragen und die gesamte Folge von Streckenabschnitten bis zum erwarteten Eintreffen der Antwort. Dann kann die Zentrale überprüfen, ob ein Befahren des angegebenen Streckenabschnitts zur Zeit möglich ist. Falls die Zentrale feststellt, daß ein Befahren der geplanten Streckenabschnitte nicht möglich ist, dann muß, sie wie im Falle einer reinen GSM-gestützten Dialogsystems ohne Massenspeicher an Bord die Route von mehreren möglichen Streckenabschnitten berechnen. Als Daten wird an das Fahrzeug eine Routenempfehlung ausgegeben. Das ist im allgemeinen eine Folge von Streckenabschnitten. Diese Streckenabschnitte können als Nummern von einzelnen Streckenabschnitten übergeben werden oder als Codes von Straßennamen.

Bei der Ausgabe der Daten wird geprüft, ob die Versionsnummer der Daten in der Zentrale und im Fahrzeug übereinstimmen und ob das Fahrzeug die aktuellste Version der Daten schon hat. Falls das Fahrzeug eine ältere Version hat, dann existieren möglicherweise gewisse Streckenabschnitte in den alten Daten noch nicht. Diese müssen dann in allen Details beschrieben werden, z.B. Länge und Richtung der einzelnen Vektoren, eventuell notwendige Anzeige- oder Sprachausgaben.

Generell kann einem Fahrer eine Meldung ausgegeben werden, sobald Unstimmigkeiten auftreten. Er kann darauf hingewiesen werden, daß er mit einer neuen Kartenbasis an Bord wohl weniger Probleme haben dürfte. Denn eine Sonderbehandlung im Fall von nichtsynchronisierten Daten bedeutet auch erhöhte Kommunikationskosten.

## Patentansprüche

1. Verfahren zur dynamischen Routenempfehlung im innerstädtischen Bereich für ein Fahrzeug mit einem autarken Navigationssystem mittels eines Mobilfunkdienstes und einer Verkehrsleit- und Informationszentrale, wobei das Fahrzeug eine Navigations- und eine Mobilfunkeinrichtung aufweist,
bei dem durch den Benutzer mit der Navigationseinrichtung über eine Mobilfunk-Schnittstelle über ein Mobilfunknetz und einer Verkehrsleit- und Informationszentrale im Dialog eine aktuelle Route angefordert wird,
bei dem die Zieleingabe an jedem beliebigen Ort unabhängig von einer Mobilfunkverbindung zur Zentrale erfolgt,
bei dem die Navigationseinrichtung zunächst rein autark aufgrund der gespeicherten Borddaten die Route zum eingegebenen Ziel berechnet,
bei dem ferner zusammen mit einer Anfrage an die Zentrale statt der aktuellen die errechnete voraussichtliche Position zum Zeitpunkt der erwarteten Antwort an das Fahrzeug übertragen wird, und
bei dem die Daten der Routenempfehlung in Form von einer Folge von Streckenabschnitten an das Fahrzeug gegeben werden.

2. Verfahren nach Anspruch 1,
**dadurch gekennzeichnet,** daß mit der Routenanfrage an die Zentrale die Versionsnummer der im Massenspeicher der Bordeinrichtung gespeicherten Daten und die gesamte Folge von Streckenabschnitten bis zum erwarteten Eintreffen der Antwort an die Zentrale übertragen und dort mit der aktuellen Datenversion verglichen werden und daß die Zentrale im Falle einer älteren Versionsnummer bestimmte fehlende Streckenabschnittsdaten und ein Hinweissignal zum Fahrzeug überträgt, wobei das Fehlen der aktuellen Version angezeigt wird.
